(19) Europäisches Patentamt
European Patent Office
Office européen des brevets

(11) **EP 4 616 928 A1**

(12) **EUROPEAN PATENT APPLICATION**
published in accordance with Art. 153(4) EPC

(43) Date of publication:
**17.09.2025  Bulletin 2025/38**

(21) Application number: **22965040.3**

(22) Date of filing: **07.11.2022**

(51) International Patent Classification (IPC):
**B01D 65/10** (2006.01)

(52) Cooperative Patent Classification (CPC):
**B01D 65/10**

(86) International application number:
**PCT/JP2022/041370**

(87) International publication number:
**WO 2024/100713 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Kubota Corporation
Osaka 556-8601 (JP)**

(72) Inventors:
• **ISHIHARA, Yukako
  Amagasaki-shi, Hyogo 661-8567 (JP)**
• **OKAJIMA, Yasunobu
  Amagasaki-shi, Hyogo 661-8567 (JP)**
• **YOSHIZAKI, Ken
  Amagasaki-shi, Hyogo 661-8567 (JP)**
• **TANAKA, Ken
  Amagasaki-shi, Hyogo 661-8567 (JP)**

(74) Representative: **Mewburn Ellis LLP
Aurora Building
Counterslip
Bristol BS1 6BX (GB)**

(54) **MONITORING DEVICE**

(57)     [Problem] A monitoring device is provided which can improve the sensitivity in detection of particles to be monitored included in treated water obtained by a wastewater treatment. [Solution] A monitoring device 4 includes a branch pipe 402 branched from a pipe 401 for guiding the treated water obtained by the wastewater treatment, a membrane sensor 45 having a filtration membrane set in a direction crossing the flow of the treated water flowing through the branch pipe 402, and for filtrating the treated water, and a pressure sensor 46 for measuring the differential pressure between the first pressure of the treated water on the upstream side of the membrane sensor 45 and the second pressure of the treated water on the downstream side of the membrane sensor 45. The filtration membrane has a smaller pore size than that of the particle to be monitored.

FIG. 1

**EP 4 616 928 A1**

**Description**

Technical Field

The present invention relates to a monitoring device for detecting the leakage of particles to be monitored in a wastewater treatment.

Background Art

PTL 1 and PTL 2 each disclose a device for detecting the integrity of a filtration membrane.

The device disclosed in PTL 1 receives the permeate of a filtration membrane, and detects the breakage of the filtration membrane on the basis of the pressure on the supply side of a first sensor membrane, the pressure between the first sensor membrane and a second sensor membrane, and the pressure on the permeation side of the second sensor membrane. Herein, the first sensor membrane is set in parallel with the flow of the permeate of the filtration membrane. Namely, with the device described in PTL 1, a cross flow filtration system is adopted.

The device disclosed in PTL 2 receives the permeate of a filtration membrane into a first chamber, and detects the breakage of the filtration membrane on the basis of the measurement pressure of a pressure measuring instrument provided on the supply side of the sensor membrane, and the measurement pressure of a pressure measuring instrument provided on the permeation side of the sensor membrane. Herein, the sensor membrane provided between the first chamber and a second chamber is set in parallel with the flow of the permeate of the filtration membrane. Namely, with the device described in PTL 2, a cross flow filtration system is adopted.

In order to detect the particles to be monitored included in the treated water obtained by a wastewater treatment, the device adopting a cross flow filtration system as in PTL 1 and PTL 2 has a sensor membrane with the membrane surface set in parallel with the flow of the treated water supplied to the sensor membrane. For this reason, the deposition of the particles on the membrane surface of the sensor membrane can be suppressed by the flow. Accordingly, the blockage of the sensor membrane can be suppressed, which provides an advantage of being able to reduce the exchange frequency of the sensor membrane. However, the total amount of the particles to be monitored included in the treated water supplied to the sensor membrane are not filtrated by the sensor membrane. For this reason, only some of the particles to be monitored included in the treated water supplied to the sensor membrane can be captured. Accordingly, there is room for improvement for the device adopting a cross filtration system in that it is difficult to improve the sensitivity in detection of the particles to be monitored included in the treated water obtained by a wastewater treatment.

In contrast to this, the device adopting the dead-end filtration system has a sensor membrane with the membrane surface set crossing the flow of the treated water supplied to the sensor membrane, and filtrates the total amount of the treated water supplied to the sensor membrane. For this reason, the total amount of the particles to be monitored included in the treated water supplied to the sensor membrane can be captured. This provides an advantage of being able to improve the sensitivity in detection of the particles to be monitored included in the treated water obtained by a wastewater treatment. However, a larger number of particles other than the particles to be monitored are captured as compared with the device adopting a cross flow filtration system. For this reason, as compared with the device adopting a cross flow filtration system, there is room for improvement for the device adopting a dead-end filtration system in that the exchange frequency of the sensor membrane for capturing the particles to be monitored is high, and in that erroneous detection may be caused regarding the leakage of the particles to be monitored.

Citation List

Patent Literature

PTL 1: U.S. Patent No. 8135547
PTL 2: U.S. Patent No. 10159941

Summary of Invention

Technical Problem

The present invention was completed in view of the foregoing circumstances. It is an object of the present invention to provide a monitoring device capable of improving the sensitivity in detection of particles to be monitored included in treated water obtained by a wastewater treatment. Solution to Problem

A first aspect of the present invention is a monitoring device for detecting leakage of particles to be monitored in a wastewater treatment, characterized by including a branch pipe branched from a pipe for guiding treated water obtained by the wastewater treatment; a membrane sensor having a filtration membrane set in a direction crossing the flow of the treated water flowing through the branch pipe, and for filtrating the treated water; and a pressure sensor for measuring the differential pressure between the first pressure of the treated water on the upstream side of the membrane sensor and the second pressure of the treated water on the downstream side of the membrane sensor, and characterized in that the filtration membrane has a smaller pore size than that of the particle to be monitored.

In accordance with a first aspect of the present invention, the filtration membrane for filtrating the treated water flowing through the branch pipe is set in the direction crossing the flow of the treated water. In other words, the monitoring device adopts a dead-end filtration system. Further, the filtration membrane has a smaller pore size than that of the particle to be monitored, and hence can capture the particles to be monitored with more reliability. For this reason, the monitoring device can improve the sensitivity in detection of the particles to be monitored.

A second aspect of the present invention is a monitoring device characterized in that the filtration membrane is a track etched membrane in the first aspect of the present invention.

In accordance with the second aspect of the present invention, the filtration membrane is a track etched membrane. For this reason, the pore size distribution of the pores formed in the filtration membrane is uniform. For this reason, the monitoring device can suppress the occurrence of erroneous detection regarding the leakage of the particles to be monitored, which can improve the sensitivity in detection of the particles to be monitored.

A third aspect of the present invention is a monitoring device characterized in that the pore size is set so as to allow the passage of protein smaller than the particles to be monitored in the first or second aspect of the present invention.

In accordance with the third aspect of the present invention, the filtration membrane can pass protein smaller than the particles to be monitored therethrough. Namely, it is possible to more reduce the number of particles to be captured by the filtration membrane per unit time. For this reason, the monitoring device can more prolong the time until exchange of the filtration membrane. Accordingly, it is possible to improve the sensitivity in detection of the particles to be monitored while suppressing the exchange frequency of the filtration membrane.

A fourth aspect of the present invention is a monitoring device characterized in that the protein adsorption rate of the filtration membrane is smaller than the protein adsorption rate of each of cellulose acetate (CA), polyvinylidene fluoride (PVDF), and polytetrafluoroethylene (PTFE) in any one of the first to third aspects of the present invention.

In accordance with the fourth aspect of the present invention, the protein adsorption rate of the filtration membrane is smaller than a prescribed value. For this reason, it is possible to more suppress the blockage of the filtration membrane due to adsorption of protein onto the filtration membrane. Accordingly, the monitoring device can furthermore improve the sensitivity in detection of the particles to be monitored while suppressing the exchange frequency of the filtration membrane.

A fifth aspect of the present invention is a monitoring device characterized in that the pressure sensor calculates the filtration resistance by dividing the differential pressure by a filtration flux, and detects the leakage on the basis of the ratio of the time average value of the filtration resistance at a first timing, and the time average value of the filtration resistance at a second timing after the first timing in any one aspect of the first to fourth aspects of the present invention.

In accordance with the fifth aspect of the present invention, the monitoring device can detect the leakage of the particles to be monitored with a higher precision irrespective of the temporal variation of the flow rate of the treated water flowing through the branch pipe.

A sixth aspect of the present invention is a monitoring device characterized in that the pressure sensor calculates the filtration resistance only by the differential pressure, and detects the leakage on the basis of the filtration resistance in any one aspect of the first to fourth aspects of the present invention.

In accordance with the sixth aspect of the present invention, the monitoring device can detect the leakage of the particles to be monitored with a higher precision.

A seventh aspect of the present invention is a monitoring device further including an air vent valve provided on the upstream side of the membrane sensor, and for releasing the air mixed in the treated water flowing toward the membrane sensor through the branch pipe in any one aspect of the first to sixth aspects of the present invention.

In accordance with the seventh aspect of the present invention, the monitoring device can release the air mixed in the treated water, and can suppress the variation in value of the monitoring indicator (e.g., the filtration resistance). As a result of this, the monitoring device can detect the particles to be monitored with a higher precision, and can detect the leakage of the particles to be monitored with a higher precision.

An eighth aspect of the present invention is a monitoring device characterized by further including a concentration unifying means provided on the upstream side of the membrane sensor, and for unifying the concentration of the treated water in any one aspect of the first to seventh aspects of the present invention.

In accordance with the eighth aspect of the present invention, the concentration unifying means can unify the concentrations of the entire treated water obtained by the wastewater treatment. As a result of this, the monitoring device can reduce the concentration polarization of the solid content in the entire treated water obtained by the wastewater treatment. For this reason, even when the flow rate of the treated water flowing through the branch pipe is relatively smaller on the basis of the total flow rate of the treated water obtained by the wastewater treatment, it is possible to detect the leakage of the particles to be monitored with a higher precision.

Advantageous Effects of Invention

The present invention can provide a monitoring device capable of improving the sensitivity in detection of particles to be monitored included in treated water obtained by a wastewater treatment.

Brief Description of Drawings

[Fig. 1]

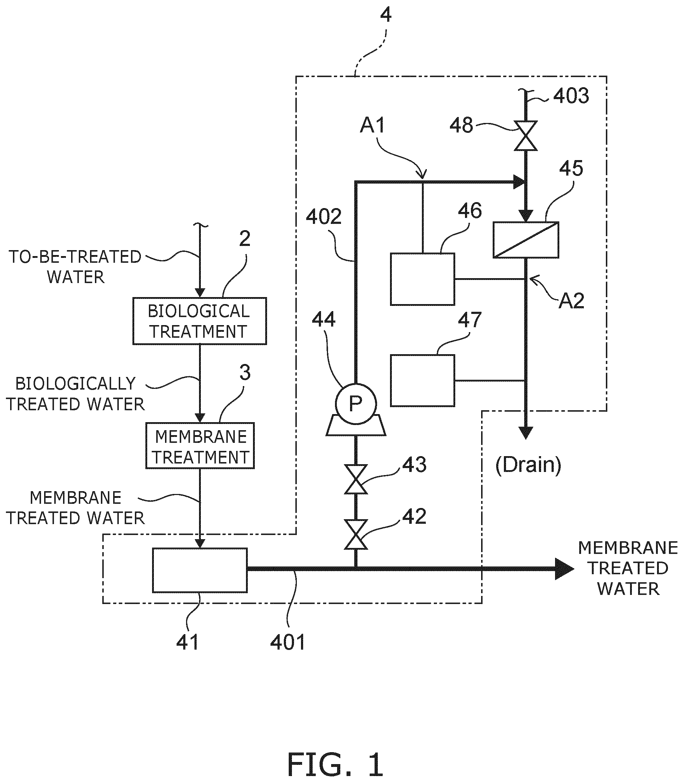

Fig. 1 is a block view showing a monitoring device in accordance with an embodiment of the present invention.
[Fig. 2]

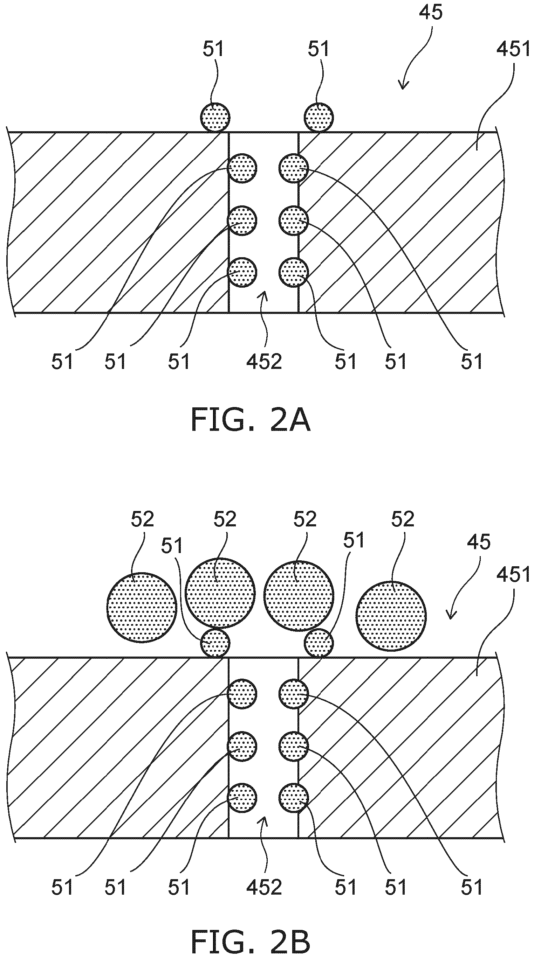

Fig. 2 is a schematic cross sectional view showing a filtration membrane of a membrane sensor of the present embodiment.
[Fig. 3]

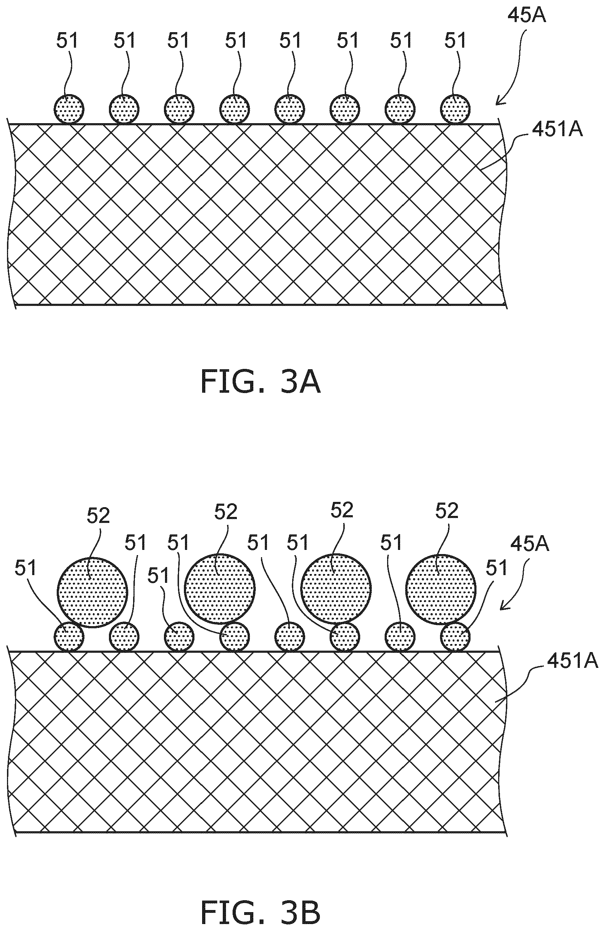

Fig. 3 is a schematic cross sectional view showing a filtration membrane of a membrane sensor of Comparative Example.
[Fig. 4]

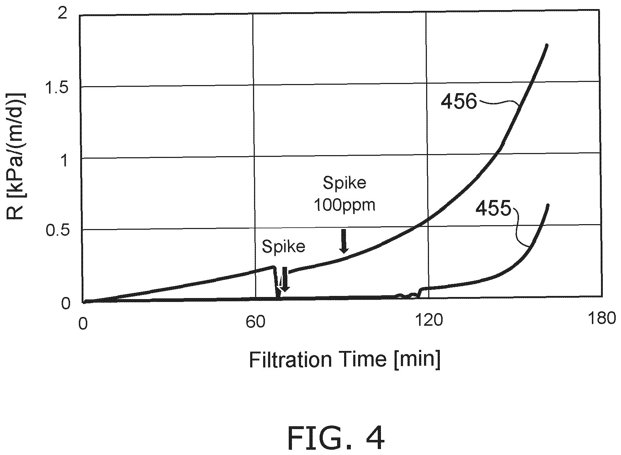

Fig. 4 is a graph showing one example of the result of the study carried out by the present inventors.

Description of Embodiments

Below, embodiments of the present invention will be described by reference to the accompanying drawings.
Incidentally, the embodiments described below are preferable specific examples of the present invention, and hence have various technically preferable restrictions. However, the scope of the present invention is not limited to the aspects unless otherwise specified to limit the present invention in the following description. Further, in each drawing, the same constituent elements are given the same reference numerals and signs, and a detailed description thereon will be appropriately omitted.
Fig. 1 is a block view showing a monitoring device in accordance with an embodiment of the present invention.
A monitoring device 4 in accordance with the present embodiment detects the leakage of particles to be monitored in a wastewater treatment. For example, the wastewater treatments include a biological treatment and a membrane treatment. However, the wastewater treatment of the present embodiment does not necessarily have to include a biological treatment and a membrane treatment, and may include, for example, a clarifying step by fiber filtration and a spool filter in general. In the description of the present embodiment, the case where the wastewater treatments include a biological treatment and a membrane treatment will be taken as an example. In this case, as shown in Fig. 1, the monitoring device 4 in accordance with the present embodiment detects the leakage of the particles to be monitored due to breakage of the membrane for use in the membrane treatment 3 in the wastewater treatment for performing a biological treatment 2 and a membrane treatment 3.
The step of the biological treatment 2 shown in Fig. 1 is the step of introducing to-be-treated water into a bioreactor tank in which a biological treatment is performed, and obtaining biologically treated water. The biological treatment 2 may only treat the to-be-treated water introduced into the bioreactor tank in the presence of a microorganism, and has no particular restriction. In other words, the biological treatment 2 may be an aerobic biological treatment, or may be an anaerobic biological treatment. In other words, the microorganism may be an aerobic microorganism, or may be an anerobic microorganism. Examples of the biological treatment 2 may include an activated sludge process (including a membrane separation activated sludge process), a carrier method, and a fixed bed biological membrane method.
The step of the biological treatment 2 can provide biologically treated water reduced in an organic water pollutant included in the to-be-treated water.
The membrane treatment 3 shown in Fig. 1 may be carried out at the subsequent stage of the biological treatment 2, or may be carried out at the same stage as that of the biological treatment 2. Specifically, the membrane separation device (not shown) for use in the membrane treatment 3 may be provided outside the bioreactor tank for use in the biological treatment 2, or may be provided in the inside of the bioreactor tank. When the membrane separation device is provided outside the bioreactor tank, the membrane separation device subjects the biologically treated water obtained by the step of the biological treatment 2 to solid-liquid separation, and thereby obtains membrane-treated water. On the other hand, when the membrane separation device is provided in the inside of the bioreactor tank, the membrane separation device subjects the in-tank liquid of the bioreactor tank to solid-liquid separation, and thereby obtains membrane-treated water. The membrane-treated water of the present embodiment is one example of the "treated water" of the present invention.

The membrane for use in the membrane treatment 3, namely, the membrane to be provided at the membrane separation device may only be able to subject the biologically treated water or the in-tank liquid of the bioreactor tank to solid-liquid separation, and has no particular restriction. Examples of the membrane for use in the membrane treatment 3 may include a microfiltration membrane (MF membrane) and an ultrafiltration membrane (UF membrane). Examples of the shape of the membrane for use in the membrane treatment 3 may include a hollow fiber membrane, a tubular membrane, and a flat plate membrane. Examples of the material for the membrane for use in the membrane treatment 3 may include organic membranes of cellulose acetate, polyvinylidene fluoride, polyolefin, polyethylene chloride, polyamide, polyacrylonitrile, polytetrafluoroethylene, and the like, and inorganic membranes of ceramics (e.g., mullite, alumina, and zirconia), and the like.

Incidentally, as described previously, the wastewater treatment of the present embodiment does not necessarily have to include a membrane treatment. For example, the biologically treated water may be able to be subjected to solid-liquid separation by other solid-liquid separating means than a membrane separation device. In this case, the biologically treated water of the present embodiment is one example of the "treated water" of the present invention.

The monitoring device 4 shown in Fig. 1 includes a pipe 401, a branch pipe 402, a water switching valve 42, a membrane sensor 45, a differential pressure sensor 46, and a flow rate sensor 47.

The pipe 401 guides the membrane treated water obtained by the membrane treatment 3. The branch pipe 402 is branched from the pipe 401, and guides at least a part of the membrane treated water flowing through the pipe 401 toward the membrane sensor 45. The water switching valve 42 is provided at the branch pipe 402, and switches between the state in which at least a part of the membrane treated water flowing through the pipe 401 flows toward the membrane sensor 45 and the state in which the membrane treated water flowing through the pipe 401 ceases to flow toward the membrane sensor 45. In other words, when the water switching valve 42 is opened, at least a part of the membrane treated water flowing through the pipe 401 flows toward the membrane sensor 45. On the other hand, when the water switching valve 42 is closed, the membrane treated water flowing through the pipe 401 does not flow toward the membrane sensor 45, and is guided to the subsequent step of the monitoring device 4.

The membrane sensor 45 has a filtration membrane, and filtrates the membrane treated water flowing through the branch pipe 402 by the filtration membrane. The filtration membrane of the membrane sensor 45 is set in a direction crossing the flow of the membrane treated water, and filtrates the total amount of the membrane treated water flowing through the branch pipe 402, thereby capturing particles to be monitored. In other words, a dead-end filtration system is adopted for the membrane sensor 45. The filtration membrane of the membrane sensor 45 has a smaller pore size than that of the particle to be monitored.

Herein, in the present description, the "dead-end filtration system" represents the system in which a filtration membrane for filtrating treated water such as membrane treated water or biologically treated water is set in a direction crossing (specifically orthogonal to) the flow of the treated water flowing through the branch pipe 402, and filtrates the total amount of the treated water flowing through the branch pipe 402. On the other hand, in the present description, the "cross flow filtration system" represents the system in which a filtration membrane for filtrating treated water such as membrane treated water or biologically treated water is set in a direction in parallel with the flow of the treated water flowing through the branch pipe 402, and filtrates a part of the treated water flowing through the branch pipe 402.

The particles to be monitored, to be captured by the filtration membrane of the membrane sensor 45 are the particles not included in the membrane treated water when the membrane for use in the membrane treatment 3 is not broken, and are the particles with a diameter of, for example, about 3 $\mu$m or more. Examples of the particles to be monitored, to be captured by the filtration membrane of the membrane sensor 45 may include Cryptosporidium and diarrhea. On the other hand, other particles than the particles to be monitored to be captured by the filtration membrane of the membrane sensor 45 are the particles included in the membrane treated water even when the membrane for use in the membrane treatment 3 is not broken, and are the particles with a diameter of, for example, less than about 1 $\mu$m. Examples of the other particles than the particles to be monitored, to be captured by the filtration membrane of the membrane sensor 45 may include protein.

The details of the filtration membrane of the membrane sensor 45 will be described later.

The differential pressure sensor 46 measures the differential pressure between the first pressure of the membrane treated water at a first position A1 on the upstream side (i.e., on the primary side) of the membrane sensor 45 and the second pressure of the membrane treated water at a second position A2 on the downstream side (i.e., on the secondary side) of the membrane sensor 45. The differential pressure sensor 46 of the present embodiment is one example of the "pressure sensor" of the present invention. The first position A1 is a given position of the branch pipe 402 on the upstream side of the membrane sensor 45. The second position A2 is a given position of the branch pipe 402 on the downstream side of the membrane sensor 45.

The differential pressure sensor 46 calculates the filtration resistance as a monitoring indicator, and detects the leakage of the particles to be monitored on the basis of the filtration resistance. For example, the differential pressure sensor 46 calculates the filtration resistance by dividing the differential pressure between the first pressure and the second pressure by a filtration flux. In the present description, the "filtration flux" represents the membrane filtrated water amount per unit membrane area / unit time ($m^3/(m^2 \cdot d)$ or m/d), and represents, for example, the membrane filtrated water amount ($m^3/d$) of one day per membrane area ($1\ m^2$). Then, the differential pressure sensor 46 detects the leakage of the particles to be monitored on the basis of the ratio of the time average value of the filtration resistance at the first timing and the time average value of the filtration resistance at the second timing after the first timing. For example, the second timing is the time about 1 hour or more and 6 hours or less later than the first timing. Alternatively, when the flow rate of the membrane treated water flowing through the branch pipe 402 is stable, the differential pressure sensor 46 may calculate the filtration resistance only by the differential pressure between the first pressure and the second pressure, and may detect the leakage of the particles to be monitored on the basis of the filtration resistance.

The filtration flux at the membrane sensor 45 of the present embodiment is, for example, about 5 m/d, and is higher than the filtration flux with the general MEMBRANE SEPARATION ACTIVATED SLUDGE METHOD (generally 1 m/d or less).

Incidentally, a first pressure sensor for measuring the first pressure of the membrane treated water at the first position A1, and a second pressure sensor for measuring the second pressure of the membrane treated water at the second position A2 may be provided in place of the differential pressure sensor 46. In this case, the control part (not shown) calculates the differential pressure between the first pressure and the second pressure on the basis of the detection signal regarding the first pressure received from the first pressure sensor, and the detection signal regarding the second pressure received from the second pressure sensor.

As indicated in Fig. 1, the flow rate sensor 47 measures the flow rate of the membrane treated water flowing through the branch pipe 402 on the downstream side (i.e., on the secondary side) of the membrane sensor 45. However, with the monitoring device 4 in accordance with the present embodiment, the membrane sensor 45 of a dead-end filtration system is adopted. For this reason, the flow rates of the membrane treated water flowing through the branch pipe 402 are roughly the same everywhere. For this reason, the arrangement of the flow rate sensor 47 is not limited to the downstream side of the membrane sensor 45, and may be on the upstream side of the membrane sensor 45.

As shown in Fig. 1, the monitoring device 4 further includes a concentration unifying means 41, a water amount adjusting valve 43, a water pump 44, and an air vent valve 48.

The concentration unifying means 41 is provided on the upstream side of the membrane sensor 45. Specifically, the concentration unifying means 41 is provided at a pipe 401 upstream of the portion (i.e., the branch part) at which the branch pipe 402 is connected with the pipe 401. The concentration unifying means 41 can unify the concentrations of the membrane treated water. Examples of the concentration unifying means 41 may include a line mixer and a stirrer.

The water amount adjusting valve 43 is provided at the branch pipe 402 between the water switching valve 42 and the water pump 44 as shown in Fig. 1, and adjusts the flow rate of the membrane treated water flowing through the branch pipe 402. However, it is essential only that the water amount adjusting valve 43 can adjust the flow rate of the membrane treated water flowing through the branch pipe 402, and hence may be arranged on the discharge side of the water pump 44. Alternatively, the flow rate of the membrane treated water flowing through the branch pipe 402 may be adjusted by the water switching valve 42 without providing the water amount adjusting valve 43. Further, also when a flow rate variable constant flow rate pump is adopted as the water pump 44, or when a flow rate variable means such as an invertor is provided at the water pump 44, the water amount adjusting valve 43 can be omitted.

The water pump 44 is provided at the branch pipe 402 between the water amount adjusting valve 43 and the membrane sensor 45 as shown in Fig. 1, and sucks the membrane treated water from the pipe 401 toward the branch pipe 402, and delivers the sucked membrane treated water toward the membrane sensor 45.

The air vent valve 48 is provided at an air discharge tube 403 as shown in Fig. 1, and can release the air mixed in the membrane treated water flowing through the branch pipe 402 toward the membrane sensor 45 through the air discharge tube 403. The air discharge tube 403 is connected with the branch pipe 402 on the upstream side of the membrane sensor 45. The air vent valve 48 can release the air mixed in the membrane treated water through the air discharge tube 403 by opening.

The air mixed in the membrane treated water flowing through the branch pipe 402 toward the membrane sensor 45 is lighter than the membrane treated water that is a liquid, and hence tends to be accumulated at the top in the vertical direction at the branch pipe 402. For this reason, the air vent valve 48 is desirably set at a position to be the uppermost part in the vertical direction at the branch pipe 402. In the case of the dead-end filtration system as shown in Fig. 1, the pipe (the branch pipe 402 of Fig. 1) for guiding the membrane treated water to the membrane sensor tends to be elongated, so that an air pocket tends to be generated in the inside of the pipe for guiding the membrane treated water to the membrane sensor as compared with the case of the cross flow filtration system as in PTL 1 or PTL 2. When an air pocket is generated in the inside of the pipe for guiding the membrane treated water to the membrane sensor, a measurement error tends to be caused at the differential pressure sensor. In the present embodiment, as shown in Fig. 1, the air vent valve 48 can resolve the air pocket of the branch pipe 402, and hence the measurement precision of the differential pressure sensor 46 can be enhanced. For this reason, it is possible to enhance the detection precision of the membrane sensor 45.

Herein, as described previously, for the membrane sensor 45 of the present embodiment, a dead-end filtration system is adopted. For this reason, the filtration membrane of the membrane sensor 45 can capture a larger number of particles to be monitored as compared with the membrane sensor adopting a cross flow filtration system. As a result of this, the monitoring device 4 in accordance with the present embodiment can improve the sensitivity in detection of the particles to be monitored. However, the sensor membrane adopting the dead-end filtration system filtrates the total amount of the treated water, and hence also captures a larger amount of other particles than the particles to be monitored as compared with the membrane sensor adopting the cross flow filtration system. For this reason, the sensor membrane adopting the dead-end filtration system may have a higher exchange frequency of the filtration membrane for capturing the particles to be monitored as compared with the membrane sensor adopting the cross flow filtration system, or may cause erroneous detection regarding the leakage of the particles to be monitored.

In contrast, with the monitoring device 4 in accordance with the present embodiment, the filtration membrane of the membrane sensor 45 has a smaller pore size than that of the particle to be monitored. Further, the pore size distribution of the pores formed in the filtration membrane of the membrane sensor 45 is narrower than a prescribed distribution. The dead-end filtration system is adopted, and the pore size of the filtration membrane of the membrane sensor 45 is more uniform. For these reasons, while the filtration membrane of the membrane sensor 45 allows other particles than the particles to be monitored (e.g., protein smaller than the particles to be monitored) to pass therethrough, it can capture the particles to be monitored (e.g., Cryptosporidium and diarrhea) with more reliability. For this reason, the monitoring device 4 in accordance with the present embodiment can suppress the occurrence of erroneous detection regarding the leakage of the particles to be monitored, and can improve the sensitivity in detection of the particles to be monitored. Further, the protein adsorption rate of the filtration membrane of the membrane sensor 45 is smaller than a prescribed value. For this reason, it is possible to suppress the adsorption of the protein included in the treated water as other particles than the particles to be monitored onto the filtration membrane of the membrane sensor 45. As a result of this, the monitoring device 4 in accordance with the present embodiment can suppress the exchange frequency of the filtration membrane of the membrane sensor 45.

Below, the membrane sensor 45 of the present embodiment will be further described by reference to the accompanying drawings.

Fig. 2 is a schematic cross sectional view showing the filtration membrane of the membrane sensor of the present embodiment.

Fig. 3 is a schematic cross sectional view showing a filtration membrane of a membrane sensor of Comparative Example.

Incidentally, Figs. 2(a) and 3(a) each show the state before particles to be monitored 52 are captured by the filtration membrane. Figs. 2(b) and 3(b) each show the state after the particles to be monitored 52 are captured by the filtration membrane.

The size of the protein described previously as one example of other particles than the particles to be monitored 51 is smaller than that of the particle to be monitored 52. Then, it is known that protein adsorbs onto the surfaces of the materials such as plastic, glass and a metal while being dissolved in water. When the to-be-treated water is organic wastewater, the concentration of protein in the treated water such as biologically treated water and membrane treated water not only in the to-be-treated water is higher as compared with the case where the treated water is inorganic wastewater.

Herein, first, referring to Figs. 3(a) and 3(b), a filtration membrane 451A of a membrane sensor 45A of Comparative Example will be described. The pore size distribution of the pores formed in the filtration membrane 451A is relatively wider. In other words, the size of the pore formed in the filtration membrane 451A is relatively ununiform. Examples of the material for the filtration membrane 451A of Comparative Example may include cellulose acetate (CA), polyvinylidene fluoride (PVDF), and polytetrafluoroethylene (PTFE).

When the pore size distribution of the pores is relatively wider, namely, when the sizes of the pores are relatively ununiform, as with the filtration membrane 451A of Comparative Example, a large number of the other particles than the particles to be monitored 51 such as protein are captured by the filtration membrane 451A. In other words, as shown in Fig. 3(a), even when the membrane for use in the membrane treatment 3 is not broken, a large number of other particles than the particles to be monitored 51 are captured by the filtration membrane 451A. For this reason, even when the membrane for use in the membrane treatment 3 is not broken, the differential pressure between the first pressure and the second pressure described previously in connection with Fig. 1 may become the same differential pressure as that in the case where the membrane for use in the membrane treatment 3 has been broken. Then, even when the membrane for use in the membrane treatment 3 is not broken, the differential pressure sensor 46 may erroneously detect that the membrane for use in the membrane treatment 3 has been broken. Further, even when the membrane for use in the membrane treatment 3 is not broken, a large number of other particles than the particles to be monitored 51 are captured by the filtration membrane 451A. For this reason, when the membrane for use in the membrane treatment 3 is broken, and the particles to be monitored 52 are captured by the filtration membrane 451A as shown in Fig. 3(b), the differential pressure between the first pressure and the second pressure, in other words, the filtration resistance as the monitoring indicator may be less likely to show an inflection point. Further, the filtration membrane 451A may be blocked by the other particles than the particles to be monitored 51. For this reason, the exchange frequency of the filtration membrane 451A may be increased.

In contrast to this, as shown in Figs. 2(a) and 2(b), the filtration membrane 451 of the membrane sensor 45 of the present embodiment has a pore 452 with a smaller pore size than that of the particle to be monitored 51. The pore size distribution of the pores 452 formed in the filtration membrane 451 is narrower than a prescribed distribution. In other words, the sizes of the pores 452 formed in the filtration membrane 451 are relatively uniform. The pore size distribution of the pores 452 formed in the filtration membrane 451 is narrower than respective pore size distributions of cellulose acetate (CA), polyvinylidene fluoride (PVDF), and polytetraethylene (PTFE). As the filtration membrane 451 of the present embodiment, mention may be made of a track etched membrane using polycarbonate (PC), polyester (PEs), or the like as the material. Herein, the "track etched membrane" in the present description represents the filtration membrane manufactured using an etching step utilizing an ion beam. The track etched membrane has features of having a narrower pore size distribution, and having a smaller membrane thickness as compared with polytetrafluoroethylene (PTFE), or the like, or other features. Specifically, examples of the material for the filtration membrane 451 may include ISOPORE (registered trademark) manufactured by Merck Corporation.

Further, the pore size of the filtration membrane 451 of the membrane sensor 45 of the present embodiment is desirably the size capable of capturing Cryptosporidium or diarrhea that is the particle to be monitored, or the like, and the size capable of allowing protein that is other particle than the particle to be monitored, or the like to pass.

By the technical features regarding the filtration membrane 451 of the present embodiment, as shown in Fig. 2(a), the filtration membrane 451 of the present embodiment can allow a large number of the other particles than the particles to be monitored 51 such as protein with a smaller particle size than that of the particles to be monitored 52 to pass through the pores 452. Further, as shown in Fig. 2(b), the filtration membrane 451 can capture the particles to be monitored 52 with more reliability. For this reason, the monitoring device 4 in accordance with the present embodiment can suppress the occurrence of erroneous detection regarding the leakage of the particles to be monitored 52, and can improve the sensitivity in detection of the particles to be monitored 52.

Further, the protein adsorption rate of the filtration membrane 451 is smaller than a prescribed value. The protein adsorption rate of the filtration membrane 451 is smaller than respective protein adsorption rates of cellulose acetate (CA), polyvinylidene fluoride (PVDF), and polytetrafluoroethylene (PTFE). The protein adsorption rate of ISOPORE manufactured by Merck Corporation is 3 $\mu$g/cm$^2$, and is smaller than the protein adsorption rate (4 $\mu$g/cm$^2$) of OMNIPORE (registered trademark) of hydrophilic polytetrafluoroethylene (PTFE) manufactured by Merck Corporation.

As a result of this, it is possible to suppress the adsorption of protein included in the treated water such as biologically treated or membrane treated water onto the filtration membrane 451 as the other particles than the particles to be monitored 51. For this reason, it is possible to more suppress the blockage of the filtration membrane 451 due to the adsorption of protein onto the filtration membrane 451. As a result of this, the monitoring device 4 in accordance with the present embodiment can suppress the exchange frequency of the filtration membrane 451 provided at the membrane sensor 45.

Further, as described previously in connection with Fig. 1, the differential pressure sensor 46 calculates the filtration resistance by dividing the differential pressure between the first pressure and the second pressure by the filtration flux, and detects the leakage of the particles to be monitored 52 on the basis of the ratio of the time average value of the filtration resistance at the first timing and the time average value of the filtration resistance at the second timing after the first timing. As a result of this, the monitoring device 4 in accordance with the present embodiment can detect the leakage of the particles to be monitored 52 with a higher precision irrespective of the temporal variation of the flow rate of the treated water flowing through the branch pipe 402.

Alternatively, as described previously in connection with Fig. 1, when the flow rate of the membrane treated water flowing through the branch pipe 402 is stable, the differential pressure sensor 46 may calculate the filtration resistance only by the differential pressure between the first pressure and the second pressure, and may detect the leakage of the particles to be monitored 52 on the basis of the filtration resistance. Even in this case, the monitoring device 4 in accordance with the present embodiment can detect the leakage of the particles to be monitored 52 with a higher precision.

Further, the air vent valve 48 can release the air mixed in the membrane treated water flowing through the branch pipe 402 toward the membrane sensor 45 through an air discharge tube 403 by being opened intermittently. For example, the air vent valve 48 is opened about one time per day for about 1 minute. As a result of this, the monitoring device 4 in accordance with the present embodiment can release the air mixed in the membrane treated water, and can suppress the variation in the value of the filtration resistance as a monitoring indicator. As a result of this, the monitoring device 4 can detect the particles to be monitored 52 with a higher precision, and can detect the leakage of the particles to be monitored 52 with a higher precision.

Further, the concentration unifying means 41 is provided on the upstream side of the membrane sensor 45, and can unify the concentrations of the membrane treated water. As a result of this, the monitoring device 4 in accordance with the present embodiment can reduce the concentration polarization of the solid content in the entire membrane treated water. For this reason, even when the flow rate of the membrane treated water flowing through the branch pipe 402 is relatively smaller on the basis of the total flow rate of the membrane treated water flowing through the pipe 401, the leakage of the particles to be monitored 52 can be detected with a higher precision.

Next, one example of the results of the experiment carried out by the present inventors will be described by reference to the accompanying drawings.

Fig. 4 is a graph exemplifying one example of the results of the study carried out by the present inventors.

The horizontal axis of the graph shown in Fig. 4 represents the filtration time (min). The vertical axis of the graph shown in Fig. 4 represents the filtration resistance (kPa/(m/d)).

The present inventors compared the change tendency of the filtration resistance at the time of passing water using ISOPORE (material: PC) manufactured by Merck Corporation, and OMNIPORE (material: PTFE) manufactured by Merck Corporation. The ISOPORE (material: PC) manufactured by Merck Corporation is a track etched membrane. Below, for the convenience of description, the ISOPORE (material: PC) manufactured by Merck Corporation will be referred to as a "first material 455", and the OMNIPORE (material: PTFE) manufactured by Merck Corporation will be referred to as a "second material 456".

The nominal pore size of the first material 455 is 1.2 $\mu$m, and is roughly the same as the nominal pore size (1.0 $\mu$m) of the second material 456. Although the protein adsorption rate of the first material 455 is smaller than the protein adsorption rate of the second material 456, both are roughly the same. On the other hand, the pore size distribution of the first material 455 is narrower than the pore size distribution of the second material 456.

Describing the conditions for the experiment, the diameter of the filtration membrane is 47 mm. The to-be-filtrated liquid is tap water. The present inventors added sludge to tap water at the time point at which 60 to 90 minutes had elapsed from the start of filtration. The sludge is a 10,790-mg/L MLSS. The sludge addition rate is 100 ppm. The turbidity of the to-be-filtrated liquid to be passed through the filtration membrane of the first material 455 before adding the sludge is 0.12 NTU. The turbidity of the to-be-filtrated liquid to be passed through the filtration membrane of the first material 455 after adding the sludge is 0.44 NTU. The turbidity of the to-be-filtrated liquid to be passed through the filtration membrane of the second material 456 before adding the sludge is 0.10 NTU. The turbidity of the to-be-filtrated liquid to be passed through the filtration membrane of the second material 456 after adding the sludge is 0.48 NTU.

The temperature of the to-be-filtrated liquid to be passed through the filtration membrane of the first material 455 is 21.2°C. The temperature of the to-be-filtrated liquid to be passed through the filtration membrane of the second material 456 is 22.5°C. The filtration flux is 40 m/d. The present inventors used a portable turbidity meter 2100P manufactured by HACH Co., as a turbidity meter. Further, the present inventors used a pressure sensor in place of a differential pressure sensor.

Further, the present inventors calculated the filtration resistance R using the following equation

$$R~(kPa/(m/d))~=~((Pf1~-~Pf2)~-~(Ps1~-~Ps2))/F$$

R: filtration resistance
Pf1: filtration primary side pressure at the time of filtration [kPa]
Pf2: filtration secondary side pressure at the time of filtration [kPa]
Ps1: filtration primary side pressure at the time of filtration [kPa]
Ps2: filtration secondary side pressure at the time of filtration [kPa]
F: filtration flux [m/d]
filtration primary side: to-be-filtrated water side, namely, filtration membrane upstream side
filtration secondary side: membrane filtrated water side, namely, filtration membrane downstream side

The experiment was carried out under the conditions described up to this point. As a result, one example of the temporal change of the filtration resistance at the time of passing water is as shown in Fig. 4. Namely, the following was observed: when the sludge is not mixed (before Spike shown in Fig. 4), the increase in the filtration resistance of the first material 455 is smaller than the increase in the filtration resistance of the second material 456. Further, the following was confirmed: regarding the presence or absence of the point of inflection of the filtration resistance due to sludge addition (Spike), the point of inflection of the first material 455 is more likely to be determined as compared with the point of inflection of the second material 456. In other words, the change rate of the filtration resistance of the first material 455 due to sludge addition is larger than the change rate of the filtration resistance of the second material 456 due to sludge addition.

With the graph shown in Fig. 4, the nominal pore size and the protein adsorption rate of the first material 455 are roughly the same as the nominal pore size and the protein adsorption rate of the second material 456, respectively. For this reason, the difference in temporal change of the filtration resistance shown in Fig. 4 can be considered due to the breadth of the pore size distribution.

The second material 456 with a relatively wider pore size distribution tends to also capture a substance with a smaller nominal pore size. For this reason, even when sludge is not mixed therein, the filtration resistance increases. When capture of particles, namely, blockage of the filtration membrane proceeds, even smaller particles than the sludge (large particles) come to be deposited on the membrane surface. For this reason, conceivably, even when sludge was mixed therein, a definite point of inflection was not generated in the filtration resistance of the second material 456.

On the other hand, for the first material 455 with a relatively narrower pore size distribution, the capture rate of particles with a smaller pore size is smaller than the capture rate with the second material 456. For this reason, the blockage of the filtration membrane proceeds more slowly as compared with the second material 456. Regarding mixing of sludge (large particles), and the deposition onto the membrane surface, the blockage mechanism of the filtration membrane of the first material 455 is different from the blockage mechanism of the filtration membrane of the second material 456. For this reason, conceivably, a definite point of inflection was generated in the filtration resistance of the first material 455.

Up to this point, the embodiments of the present invention were described. However, the present invention is not limited to the embodiments, and can be variously changed within the scope not departing from the appended claims. The configurations of the embodiments can be partially omitted, or can be arbitrarily combined so as to be different from the foregoing.

Reference signs List

| | |
|---|---|
| 2 | Biological treatment |
| 3 | Membrane treatment |
| 4 | Monitoring device |
| 41 | Concentration unifying means |
| 42 | Water switching valve |
| 43 | Water amount adjusting valve |
| 44 | Water pump |
| 45 | Membrane sensor |
| 45A | Membrane sensor |
| 46 | Differential pressure sensor |
| 47 | Flow rate sensor |
| 48 | Air vent valve |
| 51 | Particle |
| 52 | Particle |
| 401 | Pipe |
| 402 | Branch pipe |
| 403 | Air discharge tube |
| 451 | Filtration membrane |
| 451A | Filtration membrane |
| 452 | Pore |
| 455 | First material |
| 456 | Second material |
| A1 | First position |
| A2 | Second position |
| R | Filtration resistance |

**Claims**

1. A monitoring device for detecting leakage of a particle to be monitored in a wastewater treatment, the monitoring device comprising:

a branch pipe branched from a pipe for guiding treated water obtained by the wastewater treatment;
a membrane sensor having a filtration membrane set in a direction crossing a flow of the treated water flowing through the branch pipe, and for filtrating the treated water; and
a pressure sensor for measuring a differential pressure between a first pressure of the treated water on an upstream side of the membrane sensor and a second pressure of the treated water on a downstream side of the membrane sensor, wherein
the filtration membrane has a smaller pore size than that of the particle to be monitored.

**2.** The monitoring device according to claim 1, wherein
the filtration membrane is a track etched membrane.

**3.** The monitoring device according to claim 1 or 2, wherein
the pore size is set so as to allow passage of smaller protein than the particle to be monitored.

**4.** The monitoring device according to any one of claims 1 to 3, wherein
a protein adsorption rate of the filtration membrane is smaller than the protein adsorption rate of each of cellulose acetate (CA), polyvinylidene fluoride (PCDF), and polytetrafluoroethylene (PTFE).

**5.** The monitoring device according to any one of claims 1 to 4, wherein
the pressure sensor calculates a filtration resistance by dividing the differential pressure by a filtration flux, and detects the leakage on the basis of a ratio of a time average value of the filtration resistance at a first timing, and the time average value of the filtration resistance at a second timing after the first timing.

**6.** The monitoring device according to any one of claims 1 to 4, wherein
the pressure sensor calculates a filtration resistance by only the differential pressure, and detects the leakage on the basis of the filtration resistance.

**7.** The monitoring device according to any one of claims 1 to 6, further comprising an air vent valve provided on the upstream side of the membrane sensor, and for releasing air mixed in the treated water flowing toward the membrane sensor through the branch pipe.

**8.** The monitoring device according to any one of claims 1 to 7, further comprising a concentration unifying means provided on the upstream side of the membrane sensor, and for unifying concentrations of the treated water.

FIG. 1

FIG. 2A

FIG. 2B

51 51 51 51 51 51 51 51

45A

451A

# FIG. 3A

52 52 52 52

51 51 51 51 51 45A
51 51 51 51

451A

# FIG. 3B

FIG. 4

## INTERNATIONAL SEARCH REPORT

| International application No. |
|---|
| **PCT/JP2022/041370** |

**A. CLASSIFICATION OF SUBJECT MATTER**

**B01D 65/10**(2006.01)i
FI:  B01D65/10

According to International Patent Classification (IPC) or to both national classification and IPC

**B. FIELDS SEARCHED**

Minimum documentation searched (classification system followed by classification symbols)

B01D61/00-71/82;C02F1/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| Y | JP 60-25510 A (ASAHI KASEI KOGYO KK) 08 February 1985 (1985-02-08) pp. 1-4, fig. 1-2 | 1, 3-4, 6-8 |
| Y | JP 59-183807 A (ASAHI KASEI KOGYO KK) 19 October 1984 (1984-10-19) pp. 1-5, fig. 3 | 1, 3-4, 6-8 |
| Y | JP 07-248290 A (MAEZAWA IND INC) 26 September 1995 (1995-09-26) paragraphs [0001]-[0019], fig. 1-3 | 1, 3-4, 6-8 |
| Y | JP 06-182164 A (KURITA WATER IND LTD) 05 July 1994 (1994-07-05) paragraphs [0001]-[0030], fig. 1-2 | 1, 3-4, 6-8 |
| Y | JP 08-252440 A (JAPAN ORGANO CO LTD) 01 October 1996 (1996-10-01) paragraphs [0001]-[0036], fig. 1-8 | 1, 3-4, 6-8 |
| A | CD-ROM of the specification and drawings annexed to the request of Japanese Utility Model Application No. 074381/1992 (Laid-open No. 034730/1994) (NOK CORPORATION) 10 May 1994 (1994-05-10), paragraphs [0001]-[0033], fig. 1-3 | 1-8 |

✓ Further documents are listed in the continuation of Box C.  ✓ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 December 2022** | **27 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 616 928 A1

**INTERNATIONAL SEARCH REPORT**

| International application No. |
| PCT/JP2022/041370 |

**C.    DOCUMENTS CONSIDERED TO BE RELEVANT**

| Category* | Citation of document, with indication, where appropriate, of the relevant passages | Relevant to claim No. |
|---|---|---|
| A | CD-ROM of the specification and drawings annexed to the request of Japanese Utility Model Application No. 065100/1992 (Laid-open No. 021728/1994) (SUIDO KIKO KK) 22 March 1994 (1994-03-22), paragraphs [0001]-[0016], fig. 1-2 | 1-8 |
| A | JP 2007-190467 A (HITACHI LTD) 02 August 2007 (2007-08-02) claims 1-5, fig. 1-6 | 1-8 |
| A | WO 2015/146682 A1 (SHARP KK) 01 October 2015 (2015-10-01) paragraphs [0015]-[0022] | 2 |
| A | JP 07-060073 A (KURITA WATER IND LTD) 07 March 1995 (1995-03-07) paragraphs [0001]-[0051], fig. 1-2 | 1-8 |
| A | JP 2005-185944 A (TSUKISHIMA KIKAI CO LTD) 14 July 2005 (2005-07-14) claims 1-5, fig. 1-3 | 1-8 |
| A | JP 2000-279769 A (NKK CORP) 10 October 2000 (2000-10-10) claims 1-6, fig. 1-6 | 1-8 |

Form PCT/ISA/210 (second sheet) (January 2015)

17

**INTERNATIONAL SEARCH REPORT**
**Information on patent family members**

| International application No. |
| --- |
| **PCT/JP2022/041370** |

| Patent document cited in search report | | | Publication date (day/month/year) | Patent family member(s) | Publication date (day/month/year) |
| --- | --- | --- | --- | --- | --- |
| JP | 60-25510 | A | 08 February 1985 | (Family: none) | |
| JP | 59-183807 | A | 19 October 1984 | (Family: none) | |
| JP | 07-248290 | A | 26 September 1995 | (Family: none) | |
| JP | 06-182164 | A | 05 July 1994 | (Family: none) | |
| JP | 08-252440 | A | 01 October 1996 | (Family: none) | |
| JP | 06-034730 | U1 | 10 May 1994 | (Family: none) | |
| JP | 06-021728 | U1 | 22 March 1994 | (Family: none) | |
| JP | 2007-190467 | A | 02 August 2007 | (Family: none) | |
| WO | 2015/146682 | A1 | 01 October 2015 | (Family: none) | |
| JP | 07-060073 | A | 07 March 1995 | (Family: none) | |
| JP | 2005-185944 | A | 14 July 2005 | (Family: none) | |
| JP | 2000-279769 | A | 10 October 2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8135547 B
- US 10159941 B